**Europäisches Patentamt**

**European Patent Office**

**Office européen des brevets**

(19)

(11) Veröffentlichungsnummer: **0 034 744**
**B1**

(12) **EUROPÄISCHE PATENTSCHRIFT**

(45) Veröffentlichungstag der Patentschrift:
**10.07.85**

(51) Int. Cl.[4]: **G 09 F 13/18, B 60 Q 1/56,
B 60 Q 3/04**

(21) Anmeldenummer: **81100896.0**

(22) Anmeldetag: **09.02.81**

(54) **Beleuchtungsvorrichtung für Anzeigeanordnungen.**

(30) Priorität: **21.02.80 DE 3006457**

(43) Veröffentlichungstag der Anmeldung:
**02.09.81 Patentblatt 81/35**

(45) Bekanntmachung des Hinweises auf die Patenterteilung:
**10.07.85 Patentblatt 85/28**

(84) Benannte Vertragsstaaten:
**DE FR GB IT**

(56) Entgegenhaltungen:
**BE - A - 864 070**
**DE - A - 1 655 760**
**FR - A - 2 317 719**
**US - A - 3 780 463**
**US - A - 4 141 058**

**Die Akte enthält technische Angaben, die nach dem
Eingang der Anmeldung eingereicht wurden und die
nicht in dieser Patentschrift enthalten sind.**

(73) Patentinhaber: **Patent-Treuhand-Gesellschaft für
elektrische Glühlampen mbH, Hellabrunner Strasse 1,
D-8000 München 90 (DE)**

(72) Erfinder: **Endres, Ludwig, Dipl.-Phys., Farmerstrasse 14,
D-8031 Gröbenzell (DE)**
Erfinder: **Neilis, Ruald, Quiddestrasse 43,
D-8000 München 83 (DE)**
Erfinder: **Rasch, Erhard, Dipl.-Phys., Egerweg 2,
D-8012 Ottobrunn (DE)**

## Beschreibung

Die Erfindung betrifft eine Beleuchtungsvorrichtung für Anzeigeanordnungen in Kfz-Armaturen mit transparenten Anzeigefeldern, wobei die Anzeigefelder mittels Durchleuchtung erkennbar gemacht werden. Die durchleuchteten Anzeigefelder dienen insbesondere zur Ausleuchtung von Flüssigkristallanzeigen (LCD), die in Zukunft verstärkt anstelle von analogen Zeigeranzeigen in Armaturenbrettern Anwendung finden sollen.

Üblicherweise sind hinter den Anzeigefeldern eine oder mehrere Lampen mit oder ohne Reflektor angeordnet, wodurch ein Teil des von der Lampe abgestrahlten Lichts auf die zu durchleuchtenden Flächen fällt. Bei einer derartigen Beleuchtung ist der Wirkungsgrad, d. h. das Verhältnis des durchtretenden zum erzeugten Licht, gering; auch mangelt es oft an der Gleichmäßigkeit der Leuchtdichte auf den zu durchleuchtenden Flächen.

Aus der FR-A-2 317 719 ist eine Beleuchtungsvorrichtung für Anzeigeanordnungen bekannt, die im wesentlichen aus einer Platte aus Glas oder transparentem Kunststoff besteht, die von einem reflektierenden Rahmen eingefaßt ist. Durch eine außerhalb der Vorrichtung befindliche Miniaturglühlampe wird Licht in die Platte eingespeist, das von den polierten Oberflächen derselben totalreflektiert wird. Eine Lichtabgabe nach außen erfolgt durch Aufrauhen, d. h. Mattieren bestimmter Oberflächenbereiche.

Eine solche Beleuchtungsvorrichtung besitzt eine hohe Gleichmäßigkeit in der Lichtabgabe, aber auch hier ist der Wirkungsgrad nicht groß, da durch die Einspeisung von außen ein Teil des Lichts verlorengeht. Ein Einbau von Lampen direkt in die transparente Platte würde zwar den abgegebenen Lichtstrom erhöhen, andererseits aber bei hellen Lampen mit großer Wärmeabgabe zu Temperaturproblemen führen.

Der Erfindung liegt die Aufgabe zugrunde, eine gleichmäßige und intensiv helle Durchleuchtung der Anzeigefelder zu erreichen. Die Leuchtdichte der Felder sollte dabei so groß sein, daß auch bei hellem blendenden Sonnenlicht ein gutes Ablesen der mit der Vorrichtung ausgeleuchteten Flüssigkristallanzeigen ermöglicht wird.

Die Beleuchtungsvorrichtung mit den im Oberbegriff des Hauptanspruchs angegebenen Merkmalen ist dadurch gekennzeichnet, daß die Vorrichtung aus einem in Ausstrahlungsrichtung mit Aussparungen versehenen Hohlkörper besteht, der eine oder mehrere Halogenglühlampen oder Entladungslampen enthält, der Hohlkörper auf seinen inneren Flächen eine mindestens zu 95% strahlungsreflektierende Oberfläche aufweist, der Anteil der Aussparungen an der Gesamtfläche gleich oder kleiner 30% ist, so daß im Hohlkörper Mehrfachreflexion eintritt, und die Bautiefe des Hohlkörpers um ein Mehrfaches kleiner ist als dessen beide andere Raumdimensionen.

Durch den Hohlkörper und die Mehrfachreflexion wird mit wenigen Lichtquellen eine gleichmäßige Ausleuchtung aller Aussparungen erreicht. Mehrfachreflexion läßt sich aber nur bei Vorliegen besonderer Eigenschaften des Hohlkörpers erreichen. So muß der Reflexionsgrad aller inneren Flächen mindestens 95% betragen und der Anteil der Aussparungen an der Gesamtfläche darf 30% nicht übersteigen. Außerdem kommen für die Bestückung der Beleuchtungsvorrichtung nur Halogenglühlampen bzw. Entladungslampen in Betracht, die neben der für die Ausleuchtung von LCD-Anzeigen notwendigen Leuchtdichte auch genügend kleine Abmessungen besitzen, so daß die Mehrfachreflexion im Hohlkörper nicht gestört und gleichzeitig eine geringe Bautiefe der Vorrichtung erlangt wird. Der Hohlkörper sorgt neben der Mehrfachreflexion auch dafür, daß die für die Lampen höchstzulässigen Umgebungstemperaturen (für eine optimale Lichtausbeute) nicht überschritten werden.

Als sichtbares Licht reflektierende Schicht kommt ein weißer, nicht vergilbender, aus Literatur und Photometrie bekannter Anstrich in Betracht. Die Aussparungen können mit einem streuenden Medium, z. B. einer Trübglasscheibe oder einer farbigen Folie abgedeckt sein.

In einer weiteren Ausführungsform kann die Beleuchtungsvorrichtung Lampen enthalten, die UV-Strahlung emittieren. In diesem Fall muß jedoch der Hohlkörper auf seinen inneren Flächen zusätzlich (zur reflektierenden Beschichtung) eine die UV-Strahlung in sichtbare Strahlung umwandelnde Beschichtung aufweisen. Anstelle einer solchen Beschichtung ist es auch möglich, die Aussparungen mit einem Träger abzudecken, auf dem ein die UV-Strahlung in sichtbare Strahlung umwandelnder Leuchtstoff angebracht ist.

Der Anteil der Aussparungen an der Gesamtfläche beträgt vorteilhaft etwa 10%. Dadurch nimmt die Mehrfachreflexion im Hohlkörper weiter zu und es wird eine noch gleichmäßigere Ausleuchtung der Aussparungen erreicht.

Bei Kfz-Armaturen ist wegen der zunehmenden Kompaktheit der Autos die Forderung nach geringer Bautiefe ein wesentlicher Gesichtspunkt. Ein bedeutender Vorteil der erfindungsgemäßen Beleuchtungsvorrichtung liegt in der geringen Tiefe des Hohlkörpers, die dadurch sehr raumsparend wird und so leicht im Armaturenbrett unterzubringen ist. Selbst bei Bautiefen der Vorrichtung von kleiner also oder gleich 2 cm wird eine ausreichende Mehrfachreflexion der Strahlung erreicht, so daß eine gleichmäßige Lichtabgabe durch die Aussparungen erfolgt.

Je nach Verwendungszweck sind die Licht- bzw. Strahlungsquellen innerhalb des Hohlkörpers derart angeordnet, daß keine direkte Strahlung aus dem Hohlkörper austritt oder daß direkte Strahlung nur an denjenigen Stellen austritt, an denen für Signalzwecke besonders hohe Leuchtdichten verlangt werden. Außerdem können z. B. Teile der inneren Rückwand strukturiert sein.

Durch die Ausbildung des Hohlkörpers und die damit erreichte Mehrfachreflexion wird ein Wirkungsgrad erzielt, der mindestens zweimal so hoch ist wie bei den bekannten Anordnungen mit Reflektoren. Entsprechend kann die benötigte Leistungsaufnahme der Lampen verringert werden. Der Hohlkörper mit eingebauten Lampen wird zweckmäßigerweise als Einheit mit Vorrichtungen, z. B. Schnappverschlüssen, versehen, die eine Montage ohne besondere Hilfsmittel zulassen.

Ein Ausführungsbeispiel der Erfindung ist in den Fig. 1 bis 3 dargestellt und wird im folgenden näher beschrieben.

Fig. 1 zeigt eine perspektivische Ansicht des Hohlkörpers,

Fig. 2 die Rückansicht des Hohlkörpers bei abgenommener Rückwand,

Fig. 3 den Querschnitt des Hohlkörpers.

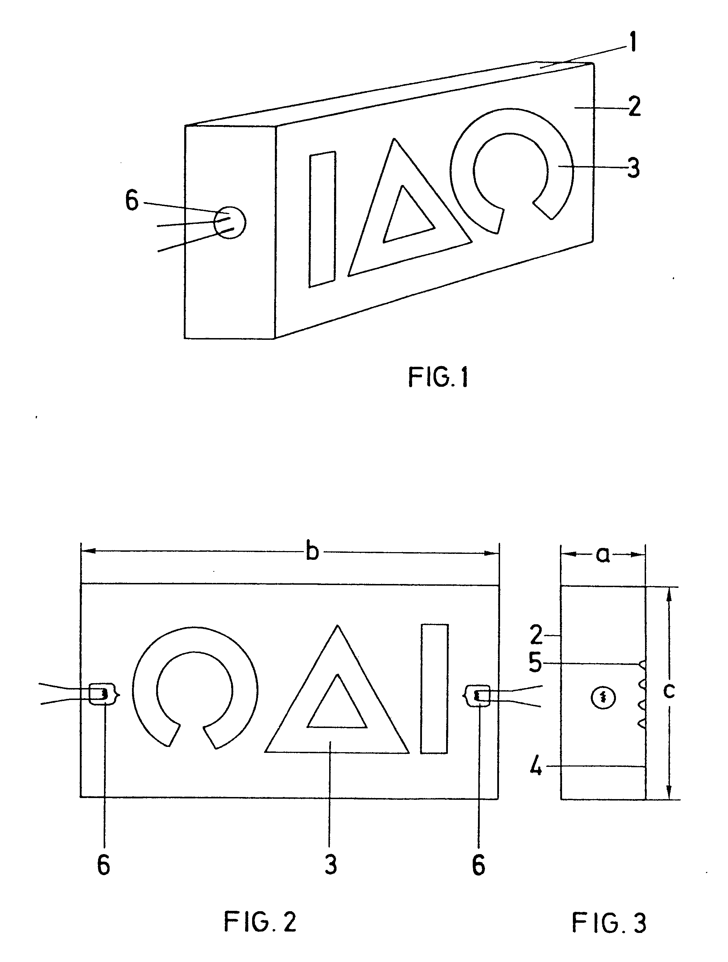

Der Hohlkörper 1 ist kastenförmig ausgebildet und besteht aus Polyester, wahlweise aus Blech. Seine Bautiefe a beträgt 20 mm, seine Breite b 200 mm, seine Höhe c 100 mm. Auf seiner Vorderfläche 2 sind entsprechend den verschiedenen Anzeigen Aussparungen 3 unterschiedlicher Größe und Form vorgesehen. Die Innenfläche des Hohlkörpers ist mattweiß beschichtet, bzw. das Material des Hohlkörpers mit weißen Pigmenten stark eingefärbt, so daß ein diffus reflektierender Reflexionsgrad von 95% oder mehr erreicht wird, wobei Teile der inneren Rückwand 4 strukturiert 5 ausgebildet sind. Als Licht- bzw. Strahlungsquellen 6 sind zwei Halogen-Glühlampen von je 5 W in dem Hohlkörper 1 integriert und derart angeordnet, daß keine direkte Strahlung auf die Aussparungen fällt. Auf die Vorderfläche 2 wird die Flüssigkeitskristall-Anzeige angebracht (nicht dargestellt), die somit von der in dem Kasten durch Mehrfachreflexion konzentrierten Strahlung durch die Aussparungen beleuchtet wird.

**Patentansprüche**

1. Beleuchtungsvorrichtung für Anzeigeanordnungen in Kfz-Armaturen mit transparenten Anzeigefeldern, wobei die Anzeigefelder mittels Durchleuchtung erkennbar gemacht werden, dadurch gekennzeichnet, daß die Vorrichtung aus einem in Ausstrahlungsrichtung mit Aussparungen (3) versehenen Hohlkörper (1) besteht, der eine oder mehrere Halogenglühlampen (6) oder Entladungslampen enthält, der Hohlkörper (1) auf seinen inneren Flächen eine mindestens zu 95% strahlungsreflektierende Oberfläche aufweist, der Anteil der Aussparungen (3) an der Gesamtfläche gleich oder kleiner 30% ist, so daß im Hohlkörper (1) Mehrfachreflexion eintritt, und die Bautiefe des Hohlkörpers um ein Mehrfaches kleiner ist als dessen beide anderen Raumdimensionen.

2. Beleuchtungsvorrichtung nach Anspruch 1, dadurch gekennzeichnet, daß die Lampen solche sind, die UV-Strahlung emittieren.

3. Beleuchtungsvorrichtung nach Anspruch 2, dadurch gekennzeichnet, daß der Hohlkörper auf seinen inneren Flächen zusätzlich eine die UV-Strahlung in sichtbare Strahlung umwandelnde Beschichtung aufweist.

4. Beleuchtungsvorrichtung nach Anspruch 2, dadurch gekennzeichnet, daß die Aussparungen zusätzlich mit einem auf einem Träger angebrachten, die UV-Strahlung in sichtbare Strahlung umwandelnden Leuchtstoff abgedeckt sind.

5. Beleuchtungsvorrichtung nach Anspruch 1, dadurch gekennzeichnet, daß der Anteil der Aussparungen an der Gesamtfläche des Hohlkörpers etwa 10% beträgt.

6. Beleuchtungsvorrichtung nach Anspruch 1, dadurch gekennzeichnet, daß die Bautiefe des Hohlkörpers kleiner als oder gleich 2 cm ist.

**Claims**

1. Illuminated display panel structure for vehicle indicator panels including transparent indication surfaces made visible by passing light therethrough wherein the display panel structure comprises a hollow element (1) provided in the direction of light emission with openings (3) and containing one or several halogen cycle incandescent lamps (6) or discharge lamps, the interior wall surfaces of the hollow element (1) have a reflectivity of at least 95%, the proportion of the openings (3) relative to the total surface is less than or equal to 30% such that multiple reflection occurs within the hollow element (1), and the depth dimension of the hollow element is several times smaller than either the width or height dimensions thereof.

2. Illuminated display panel structure according to claim 1, wherein the lamps are lamps emitting UV radiation.

3. Illuminated display panel structure according to claim 2, wherein the hollow element comprises on its inner wall surfaces an additional coating converting the UV radiation into visible radiation.

4. Illuminated display panel structure according to claim 2, wherein the openings are additionally covered with a phosphor applied on a support and converting the UV radiation into visible radiation.

5. Illuminated display panel structure according to claim 1, wherein the proportion of the openings relative to the total surface of the hollow element is approximately 10%.

6. Illuminated display panel structure according to claim 1, wherein the depth dimension of the hollow element is smaller than or equal to 2 cm.

**Revendications**

1. Dispositif d'éclairage pour agencements d'affichage dans des tableaux de bord de véhicules automobiles munis de zones transparentes d'affichage, ces zones d'affichage pouvant être repérées par éclairage en transparence, caractérisé par le fait que le dispositif consiste en un corps creux (1) pourvu d'évidements (3) dans le sens de la diffusion et renfermant une ou plusieurs lampes à hologène à incandescence (6) ou lampes à décharge, ledit corps creux (1) présentant sur ses faces internes une surface réfléchissant les rayonnements au moins à 95%, la part prise par les évidements (3) dans la superficie totale étant égale ou inférieure à 30% de façon qu'il se produise une réflexion multiple dans le corps creux (1), et la profondeur de réalisation dudit corps creux étant plusieurs fois plus petite que les deux autres dimensions de ce corps dans l'espace.

2. Dispositif d'éclairage selon la revendication 1, caractérisé par le fait que les lampes sont des lampes émettant un rayonnement UV.

3. Dispositif d'éclairage selon la revendication 2, caractérisé par le fait que le corps creux comporte en plus, sur ses faces internes, un revêtement qui convertit le rayonnement UV en rayonnement visible.

4. Dispositif d'éclairage selon la revendication 2, caractérisé par le fait que les évidements sont recouverts en plus par une substance luminescente déposée sur un support et convertissant le rayonnement UV en rayonnement visible.

5. Dispositif d'éclairage selon la revendication 1, caractérisé par le fait que la part prise par les évidements dans la superficie totale du corps creux est d'environ 10%.

6. Dispositif d'éclairage selon la revendication 1, caractérisé par le fait que la profondeur de réalisation du corps creux est inférieure ou égale à 2 cm.

FIG.1

FIG.2

FIG.3